# EUROPEAN PATENT APPLICATION

(11) **EP 0 651 485 A1**
(43) Date of publication of application: **03.05.1995**
(21) Application number: 94307887.3
(22) Date of filing: 26.10.1994
(51) Int. Cl.: H02G 3/22, H02G 3/08

(54) **Sealing arrangement and methods**

(30) Priority: 01.11.1993 GB 9322522
(71) Applicant: DRAFTEX INDUSTRIES LIMITED, Edinburgh EH3 6YY, Scotland (GB)
(72) Inventor: Muller, Thierry, F-08190 Villiers devant le Thour (FR); Correia, Jacques, F-08300 Barby (FR)
(74) Representative: Foster, David Martyn

(57) **Abstract**

For providing a moisture, draught and noise seal between an electrical cable, or bundle (6) of individual electrical wires, where the cable or bundle passes through an aperture (5) in a wall (2), such as a bulkhead between the engine and passenger compartments (3,4) of a vehicle body, a substantially rigid casing (8), made of two separate and hinged parts (10,12), is fitted over the cable or bundle (6). A sealing ring (30) seals one end of the hollow cavity thus formed. The cavity is then filled with low-melting point material (32), such as polyurethane. This material fills the cavity within the casing (8), and also fills the interstices between the individual wires of the bundle (6). The material (32) then solidifies. The casing (8) is then sealingly attached around the periphery of the aperture (5), such as by means of fixtures passing through holes (36,38) in flanges (22,24) and through corresponding apertures in a sealing ring (34).

## Description

The invention relates to sealing arrangements and methods. In an embodiment of the invention to be described, a sealing arrangement is provided for sealing around an electrical cable, or a bundle of electrical wires, where the cable or bundle passes through a dividing wall or panel.

According to the invention, there is provided a sealing arrangement for sealing around an elongate member passing through an aperture in wall means, comprising casing means adapted to be placed around a portion of the length of the elongate member adjacent the part thereof to pass through the aperture, the casing having two ends and defining a hollow cavity surrounding the said portion of the elongate member and sealed to the periphery thereof at one said end, the hollow cavity being filled with material sufficiently fluid so as to provide a seal between the inside of the casing and the elongate member, and means for sealingly attaching the other said end of the casing to the wall means around the aperture.

According to the invention, there is further provided a method of sealing a bundle of individually insulated electrical wires or conductors to wall means through an aperture in which the bundle passes, comprising the steps of providing a hollow cavity around a portion of the length of the bundle adjacent the part thereof which passes through the wall means, the cavity having one end sealed to the outside of the bundle, warming predetermined material to render it fluid but to less than the temperature at which damage occurs to the wires or conductors, flowing the fluid material into the hollow cavity through the other end thereof so that it substantially fills the cavity and flows into the interstices between the individual wires or conductors and solidifies therein and in the said cavity, and sealingly connecting the other end of the hollow cavity to the wall means around the said aperture.

A sealing arrangement embodying the invention, and a sealing method according to the invention, for sealing around an electrical cable or bundle of electrical wires where the cable or bundle passes through a dividing wall or panel, will now be described, by way of example only, with reference to the accompanying diagrammatic drawings in which:
Figure 1 is a diagrammatic cross-section through one of the sealing arrangements;
Figure 2 is a cross-section on the line II-II of Figure 1;
Figure 3 is an end view of part of the sealing arrangement of Figure 1; and
Figure 4 is a diagrammatic cross-section through another of the sealing arrangements.

The sealing arrangements to be described are for sealing around an electrical cable, or a bundle of electrical wires, where such cable or bundle passes through an aperture in a dividing wall or panel between two areas separated by the wall or panel, the sealing arrangement being intended to provide an effective seal against moisture, draughts and noise which might otherwise pass through the aperture. Such a sealing arrangement finds particular use in motor vehicle construction, such as for sealing around an electrical cable or bundle of electrical wires where it passes through an aperture in the bulkhead or dividing wall between the engine compartment of the vehicle and the passenger compartment. However, there are of course other applications both in vehicle body construction and elsewhere.

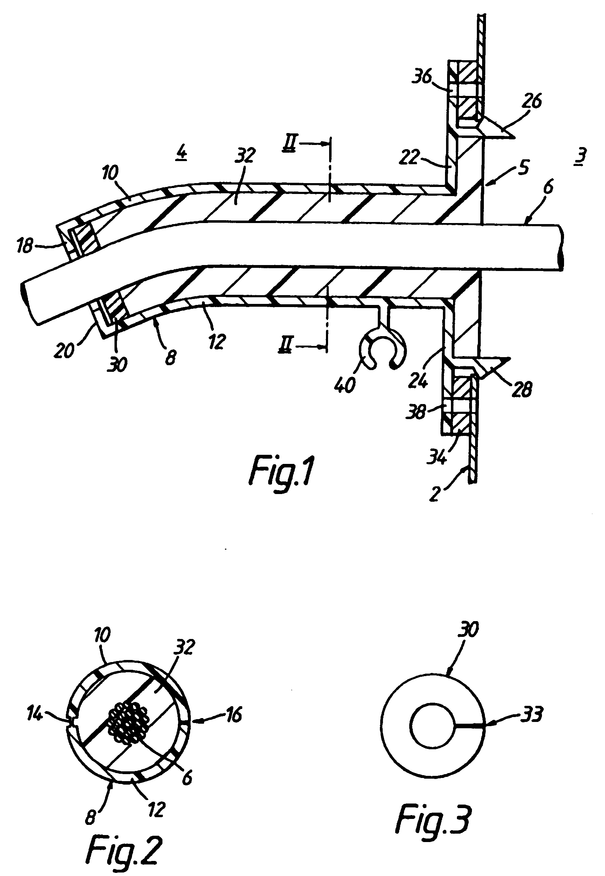

Figure 1 illustrates the dividing wall or bulkhead 2 which divides an area 3 (the vehicle's engine compartment for example) from an area 4 (the vehicle's passenger compartment for example). The bulkhead 2 is formed with an aperture 5 through which a bundle 6 of electrical wires is to pass. The sealing arrangement now to be described is intended to provide an effective seal against the passage of moisture, draughts and noise between the compartments 3 and 4. In order for the sealing arrangement to be effective, it needs to provide a seal not only between the periphery of the aperture 5 and the outer surface of the bundle 6 of wires but also between the wires themselves - because, otherwise, moisture, draughts or noise could travel within the bundle 6 and along and between the individual wires in the bundle.

The sealing arrangement comprises a casing 8 shown in Figure 2. The casing 8 comprises two substantially semi-cylindrical casing parts 10 and 12 which are hinged together by a hinge 14 which extends in a generally axial direction along the full length of the casing. Diametrically opposite to the hinge 14, the axially directed edges of the casing parts 10 and 12 abut at 16.

As shown in Figure 1, each casing part 10,12 has an inwardly directed flange 18,20 at one end of the casing and an outwardly directed flange 22,24 at the opposite end of the casing. The flanges 22,24 support resilient clips 26,28.

During initial assembly of the sealing arrangement, one of the casing parts, such as the casing part 10, is placed loosely over the outside of the bundle of wires 6 at the desired position along its length and a split ring 30 is placed over the bundle 6 so as to lie against the flange 18. The form of the ring 30 is shown in Figure 3 and is made of material which is sufficiently resilient to enable its gap 33 to be opened up sufficiently to allow it to be placed over the bundle 6, whereafter it resiles to grip the outside of the bundle. The other casing part 12 is then hinged over the bundle 6 into the position shown in Figure 1, so that its flange 20 lies against the ring 30 as well, the two casing parts then being secured together by clips or any other suitable means (not shown). The two casing parts thus embrace part of the length of the wire bundle 6 but provide an empty cavity around the outside of the bundle.

This empty cavity is then filled with material 32 of low melting point such as polyurethane. The material 32 is sufficiently fluid, or is warmed in order to become sufficiently fluid, so that it will flow into the cavity defined within the casing 8. Therefore, it not only surrounds the wire bundle 6 within the casing but also fills the interstices between the individual wires of the bundle 6. The melting point of the material 32 is sufficiently low so that any necessary heating of the material will not raise it to such temperature as will damage the material of the wires within the bundle 6, in particular the insulation material around the individual wires. Any other suitable material may also be used instead of polyurethane.

The sealing arrangement is then fitted within the aperture 5 in the bulkhead 2 using the clips 26,28. A sealing ring 34 may be placed between the flanges 22,24 and the wall of the bulkhead 2. The fitting process may be completed by means of suitable fixtures passed through holes 36 and 38 in the flanges 22 and 24, the fixtures passing also through the sealing ring 34 and the bulkhead itself.

The casing parts 10 and 12 may be made of substantially rigid moulded material. The moulding process may provide an integral clip for holding an electric cable or flexible pipe or tube for example, such as is shown at 40.

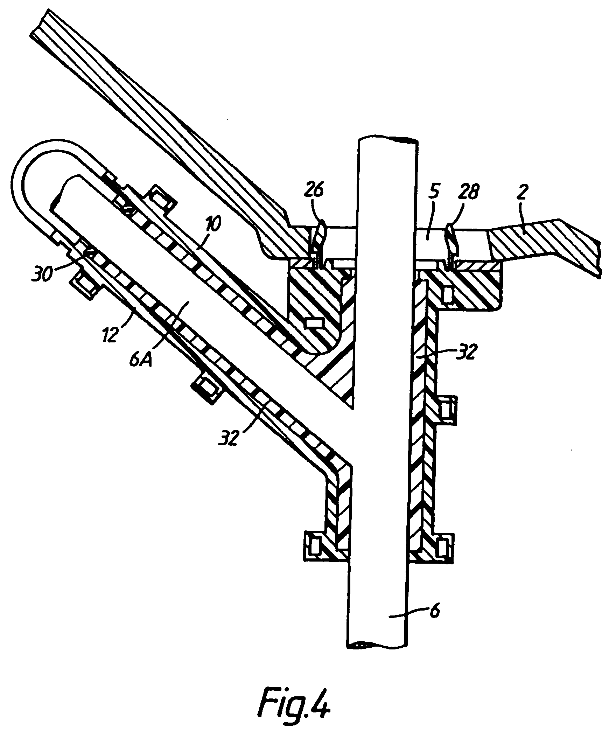

Figure 4 shows a cross-section through a modified form of the sealing arrangement where the bundle of wires 6 includes a branch 6A. Items in Figure 4 corresponding to items in Figures 1 to 3 are similarly referenced. As shown, the two casing parts 10 and 12 are adapted in shape to match the branched form of the wire bundle 6,6A. The construction is otherwise generally the same.

The sealing arrangements described ensure very effective sealing action, not only around the outside of the bundle of wires but also between the wires themselves, and without the risk of damage to the material of the wires or their insulation such as might be caused by other sealing arrangements in which sealing material is moulded onto the bundle of wires at a relatively high temperature.

## Claims

**1.** A sealing arrangement for sealing around an elongate member (6) passing through an aperture (5) in wall means (2), characterised by casing means (8) adapted to be placed around a portion of the length of the elongate member (6) adjacent the part thereof to pass through the aperture (5), the casing means (8) having two ends and defining a hollow cavity surrounding the said portion of the elongate member (6) and sealed to the periphery thereof at one said end (18,20), the hollow cavity being filled with material (32) sufficiently fluid so as to provide a seal between the inside of the casing means (8) and the elongate member (6), and means (26,28) for sealingly attaching the other said end of the casing means (8) to the wall means (2) around the aperture (5).

**2.** A sealing arrangement according to claim 1, characterised in that the material (32) is rendered sufficiently fluid by warming to a temperature less than the temperature at which damage will occur to the elongate member (6).

**3.** A sealing arrangement according to claim 1 or 2, for use where the elongate member (6) comprises a bundle of individual elongate elements, characterised in that the fluid material (32) additionally provides a seal between the individual elongate elements in the bundle.

**4.** A sealing arrangement according to claim 3, characterised in that the individual elongate elements are individual electrically insulated flexible wires or conductors together forming the said bundle.

**5.** A sealing arrangement according to any preceding claim, characterised in that the said material is polyurethane (32).

**6.** A sealing arrangement according to any preceding claim, characterised in that the casing means (8) comprises two casing parts (10,12) which are flexibly interconnected (14) to enable them to be hinged apart to be placed over the elongate member (6) and then hinged together to define the hollow cavity.

**7.** A sealing arrangement according to any preceding claim, characterised in that the said one end (18,20) is closed off by a sealing ring (30) surrounding and sealed to the elongate member.

**8.** A sealing arrangement according to claim 6, characterised in that the said one end (18,20) of the casing means (8) is closed off by a sealing ring (30) surrounding the elongate member (6) and by sealingly contacting flanges (18,20) which are formed at the corresponding end of each casing part and which are directed towards each other.

**9.** A sealing arrangement according to claim 6 or 8, characterised in that at the said other end of the casing means (8) each casing part (10,12) defines an outwardly directed flange (22,24) for sealing attachment to the wall means (2) around the said aperture (5).

**10.** A sealing arrangement according to any preceding claim, characterised in that the casing means (8) defines clip means (26,28) for clipping the casing means (8) to the periphery of the aperture (5).

**11.** A sealing arrangement according to any preceding claim, for use where the elongate member (6) has a branch (6A) which extends transversely to the elongate member immediately adjacent to the wall means (2), characterised in that the casing means (8) is shaped to embrace the elongate member (6) and a portion of the branch (6A) thereof whereby to define a single said hollow cavity.

**12.** A method of sealing a bundle of individually insulated electrical wires or conductors (6) to wall means (2) through an aperture (5) in which the bundle passes, characterised by the steps of providing a hollow cavity around a portion of the length of the bundle (6) adjacent the part thereof which passes through the wall means (2), the cavity having one end (18,20) sealed to the outside of the bundle (6), warming predetermined sealing material (32) to render it fluid but to less than the temperature at which damage occurs to the wires or conductors (6), flowing the fluid material (32) into the hollow cavity through the other end thereof so that it substantially fills the cavity and flows into the interstices between the individual wires or conductors (6) and solidifies therein and in the said cavity, and sealingly connecting the other end of the hollow cavity to the wall means around the said aperture.

**12.** A method according to claim 11, characterised in that the step of providing the hollow cavity is carried out by embracing the said portion of the length of the bundle (6) with two hingeably connected substantially semi-cylindrically shaped casing parts (10,12) made of substantially rigid material.

**13.** A method according to claim 11 or 12, in which the sealing material is polyurethane.
